(19) Europäisches Patentamt

European Patent Office

Office européen des brevets

(11) EP 0 737 807 B1

(12) **EUROPEAN PATENT SPECIFICATION**

(45) Date of publication and mention
of the grant of the patent:
**06.02.2002   Bulletin 2002/06**

(51) Int Cl.⁷: **F02D 41/26**, F02D 41/38

(21) Application number: **96105734.6**

(22) Date of filing: **11.04.1996**

(54) **Electronically controlled fuel injection system for a diesel engine**

Elektronisch gesteuertes Kraftstoffeinspritzsystem für einen Dieselmotor

Système d'injection de carburant à commande électronique pour moteur diesel

(84) Designated Contracting States:
**DE FR GB**

(30) Priority: **12.04.1995   JP 8708895**

(43) Date of publication of application:
**16.10.1996   Bulletin 1996/42**

(73) Proprietor: **TOYOTA JIDOSHA KABUSHIKI
KAISHA
Aichi-ken (JP)**

(72) Inventor: **Kizaki, Mikio
Toyota-shi, Aichi-ken (JP)**

(74) Representative:
**Leson, Thomas Johannes Alois, Dipl.-Ing. et al
Patentanwälte Tiedtke-Bühling-Kinne & Partner,
Bavariaring 4
80336 München (DE)**

(56) References cited:
JP-A- 61 207 854          US-A- 4 574 756
US-A- 4 642 773

• PATENT ABSTRACTS OF JAPAN vol. 095, no.
006, 31 July 1995 & JP 07 071302 A
(NIPPONDENSO CO LTD), 14 March 1995
• PATENT ABSTRACTS OF JAPAN vol. 018, no.
076 (M-1556), 8 February 1994 & JP 05 288110 A
(TOYOTA MOTOR CORP), 2 November 1993

**Description**

BACKGROUND OF THE INVENTION

1. Field of the Invention

The present invention relates to a fuel injection control apparatus for an electronically controlled diesel engine and, more particularly, to a fuel injection control apparatus for controlling an amount of fuel injected to an electronically controlled diesel engine by controlling actuation of an electromagnetic spill valve. (See claim 1, 1 port ; JP-A-61 207 854).

2. Description of the Related Art

Conventionally, in a fuel injection pump provided to an electronically controlled diesel engine, the opening and closing time of an electromagnetic spill valve is controlled in accordance with operational conditions of the diesel engine. The control (prestroke control) is performed so that values of fuel injection rate and fuel injection amount responsive to lift of a plunger provided in the fuel injection pump becomes equal to target values.

Japanese Laid-Open Patent Application No. 2-5739 discloses a fuel injection control apparatus using the above-mentioned control method. In this fuel injection control method, an opening and closing time of an electromagnetic spill valve is determined based on a target fuel injection rate and a target fuel injection amount which are set in accordance with operational conditions of the associated diesel engine. In this control method, a target closing time of the electromagnetic spill valve is determined by a crank angle period. A crank angle corresponding to a number (CANGL1) of pulses generated during the crank angle period and a remainder angle corresponding to a period less than a single pulse period are calculated. The remainder angle is converted into a remainder time (TSP1) based on a predetermined period of a pulse. The electromagnetic spill valve is closed when the remainder time TSP1 is elapsed after the number of pulses CANGL1 has been counted. A similar process is performed when the electromagnetic spill valve is open. Specifically, a target opening time is determined by a crank angle period. A crank angle corresponding to a number (CANGL2) of pulses generated during the crank angle period and a remainder angle corresponding to a period less than a single pulse period are calculated. The remainder angle is converted into a remainder time (TSP2) based on a predetermined period of a pulse. The electromagnetic spill valve is open when the remainder time TSP2 has elapsed after the number of pulses CANGL2 is counted.

In the above-mentioned conventional control method, the remainder times TSP1 and TSP2 are calculated based on the predetermined pulse period obtained in the previous cycle. Thus, if a large fluctuation in rotational speed of the engine is generated between the previous cycle and the current cycle, there is a large difference between the pulse period of the previous cycle and the pulse period of the current cycle. Accordingly, the remainder times TSP1 and TSP2 calculated based on the pulse period of the previous cycle cannot precisely represent true time periods of the remainder times of the current cycle.

In order to eliminate such a problem, a fuel injection control apparatus is suggested which corrects the remainder times TSP1 and TSP2 by detecting a degree of fluctuation in the rotational speed between the previous cycle and the current cycle. This correction is hereinafter referred to as a prediction correction. In the fuel injection control apparatus performing a prestroke control, the prediction correction is performed for both of the opening time and the closing time of the electromagnetic spill valve.

However, the prediction correction is not always preferable for all operational conditions of the engine. For example, when the engine is in an idling operation, a specific control of idling operation may be executed which specific control cannot be performed simultaneously with the prediction correction. Accordingly, in the fuel injection control apparatus performing the prediction correction, the prediction correction is prohibited when it is determined that an execution of the prediction correction is not appropriate. The prohibition of prediction correction is controlled by a prohibition setting signal and a prohibition canceling signal.

The prohibition setting signal may be output after the prohibition correction is performed for the closing time and before the prediction correction is performed for the opening time. Additionally, the prohibition canceling signal may be output after the prohibition correction is performed for the closing time and before the prediction correction is performed for the opening time. That is, there is a possibility that the prediction correction is performed for only one of the closing time and the opening time of the electromagnetic spill valve. Accordingly, a problem may be induced due to an output timing of the prohibition setting signal and the prohibition canceling signal so that a variation in the fuel injection amount increases when the prediction correction is performed only for one of the closing time and the opening time as compared to a case in which no prediction correction is performed.

SUMMARY OF THE INVENTION

It is a general object of the present invention to provide an improved and useful fuel injection control apparatus for an electronically controlled diesel engine in which the above-mentioned problems are eliminated.

A more specific object of the present invention is to provide a fuel injection control apparatus which reduces an error in the fuel injection amount when a prediction correction is preformed, by preventing the prediction correction from being applied to only one of the opening time and the closing time of the electromagnetic spill valve.

In order to achieve the above-mentioned object, there is provided according to the present invention a fuel injection control apparatus for an electronically controlled diesel engine, comprising:

a distributor type fuel injection pump having a spill valve which opens to return a pressurized fuel to an inlet side of the fuel injection pump;

a pulse generator outputting a series of engine revolution pulses at each predetermined crank angle of the diesel engine, the pulse generator having a gear-like pulser having a tooth cut-out part in which no tooth is provided, the gear-like pulser (7) being rotated in synchronization with rotation of a rotational shaft of the fuel injection pump; and

means for calculating a target closing time and a target opening time of the spill valve in accordance with a time when the tooth cut-out part is detected, the target closing time and the target opening time of the spill valve are corrected based on a difference in rotational speed of the diesel engine between a current cycle and a previous cycle; and

a correction for the target opening time of the spill valve is performed only when it is determined that a correction for the target closing time of the spill valve has been performed in the same cycle.

According to the above-mentioned invention, the correction for the remainder period for the target opening time of the spill valve is performed when it is determined that the remainder period for the target closing time of the spill valve has been performed. That is, if it is determined that the correction has not been performed on the remainder period for the target closing time, the correction is not applied to the remainder period for the target opening time of the spill valve. Accordingly, in the present invention, an error in the injection amount of fuel, when the correction is applied to only one of the target closing time and the target opening time of the spill valve, is reduced. Thus, operation of the engine is improved.

In one embodiment of the present invention, the determination of whether or not the target closing time has been corrected is made based on a flag set when the target closing time is corrected. Thus, the correction for the target opening time of the spill valve is performed by referring to the setting state of the flag.

Additionally, the correction for the target closing time and the target opening time may be performed based on a ratio of a first pulse period of one of the engine revolution pulses in the current cycle to a second pulse period of corresponding one of engine revolution pulses in the previous cycle. The target closing time and the target opening time are corrected by a correction factor obtained from a predetermined relationship between the correction factor and the ratio of the first pulse period to the second pulse period.

Each of the target closing time and the target opening time may be calculated based on a time period comprised of a pulse count period and a remainder period, the pulse count period corresponding to a number of engine revolution pulses to be generated during a time period from a detection of the tooth cut-out part to a target closing time or the target opening time, the remainder period corresponding a time period less than a single pulse period remaining for a time when the target closing time or the target opening time is reached. The remainder period may be calculated based on a crank angle of the diesel engine.

Other objects, features and advantages of the present invention will become more apparent from the following description when read in conjunction with the accompanying drawings.

BRIEF DESCRIPTION OF THE DRAWINGS

FIG.1 is an illustration showing a structure of a fuel injection control apparatus according to an embodiment of the present invention, the fuel injection control apparatus cooperating with a diesel engine having a supercharger;

FIG.2 is an enlarged cross-sectional view of a fuel injection pump shown in FIG.1;

FIG.3 is a block diagram of an engine control unit shown in FIG.1;

FIGS.4 and 5 are parts of a flowchart according to an embodiment of a fuel injection control process performed by an ECU 71 shown in FIG.1;

FIG.6 is a timing chart of rotational speed of the engine, a pulse count value and an actuation of an electromagnetic spill valve; and

FIG.7 is a graph showing a relationship between a revolution variation ratio and a prediction correction factor.

DETAILED DESCRIPTION OF THE PREFERRED EMBODIMENT

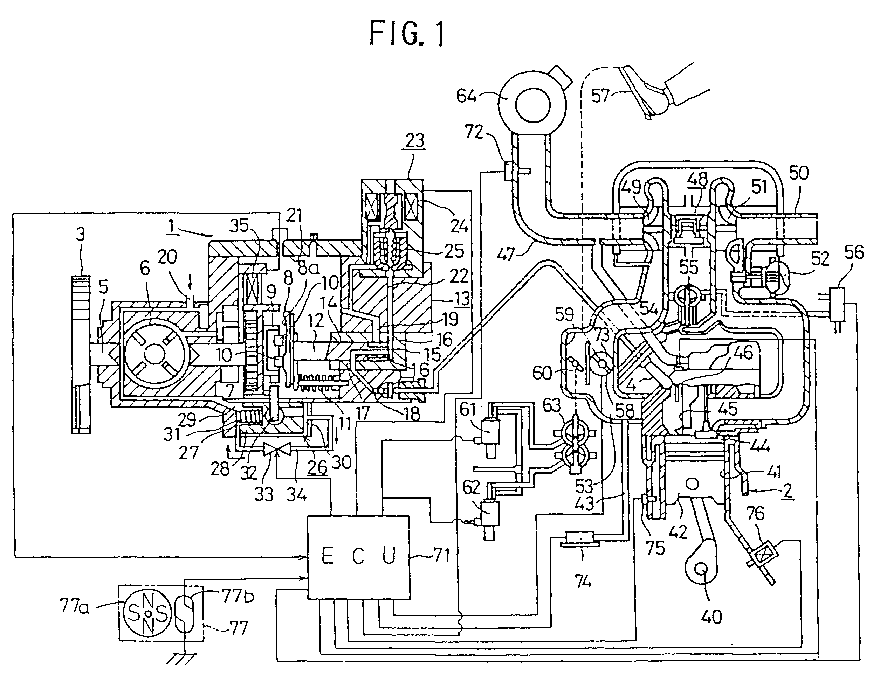

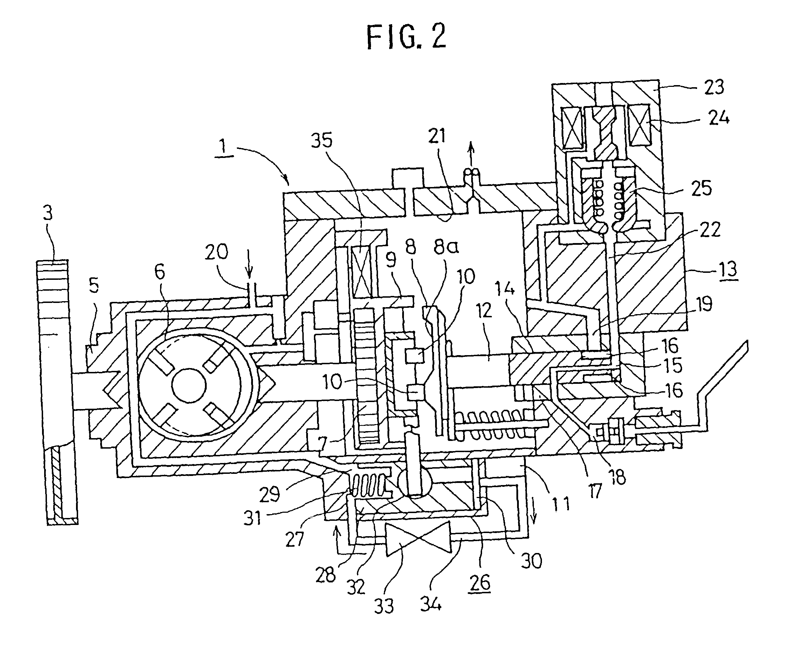

A description will now be given of a first embodiment according to the present invention. FIG.1 is an illustration showing a structure of a fuel injection control apparatus according to an embodiment of the present invention, the fuel injection control apparatus cooperating with a diesel engine having a supercharger. FIG.2 is an enlarged cross-sectional view of a distributor type fuel injection pump 1 shown in FIG.1.

The fuel injection pump 1 has a drive pulley 3 coupled with the crank shaft 40 of the diesel engine 2 via a pulley belt (not shown in the figures). The fuel injection pump 1 is driven when the drive pulley 3 is rotated. Fuel is delivered to a fuel injection nozzle 4 provided to each cylinder of the diesel engine 2, and the fuel is injected into each engine cylinder. In this case, the diesel engine 2 has four engine cylinders.

The drive pulley 3 of the fuel injection pump 1 is mounted on an end of a drive shaft 5. A fuel feed pump 6 is provided in the middle of the drive shaft 5. It should be noted that the fuel feed pump 6 is shown in a 90 degrees turned view in FIGS.1 and 2 for the sake of easy understanding. Additionally, a disk-like pulser 7 is mounted on an inner end of the drive shaft 5. The pulser 7 has a plurality of protrusions or teeth on an outer circumference thereof, the protrusions or teeth being arranged at equal angle intervals of, for example, 11.25 degrees. Hereinafter, the protrusions or teeth are simply referred to as teeth. In the present case, four tooth cut-out parts are formed at equal angle intervals. The tooth cut-out part is a portion of the outer periphery of the pulser 7 in which a tooth is not formed. The number of the tooth cut-out parts corresponds to the number of engine cylinders. The inner end of the drive shaft 5 is connected to a cam plate 8 via a coupling (not shown in the figures).

A roller ring 9 is provided between the pulser 7 and the cam plate 8. A plurality of cam roller 10 are mounted on a roller ring 9 along a circumference so that the cam rollers 10 face cam faces 8a formed on the cam plate 8. The number of cam faces 8a is equal to the number of engine cylinders of the diesel engine 2. The cam plate 8 is pressed against the can rollers 10 by a spring 11.

The cam plate 8 is fixed to an end of a plunger 12 which pressurizes fuel introduced into a cylinder 14. The cam plate 8 and the plunger 12 are rotated together by a rotation of the drive shaft 5. That is, a rotational force of the drive shaft 5 is transmitted to the cam plate 8 via a coupling. The cam plate 8 engages with the cam rollers 10 while it is rotated. Thus, the cam plate 8 reciprocates in an axial direction of the drive shaft 5 while it is rotated by the drive shaft 5. Accordingly, the plunger 12 assembled with the cam plate 8 reciprocates in the cylinder 14 while it is rotated. More specifically, when the cam faces 8a of the cam plate 8 ride on the cam rollers 10 of the cam roller 9, the plunger 12 is moved forward, and when the cam faces 8a ride off from the cam rollers 10, the plunger 12 is moved backward.

The plunger 12 is inserted into the cylinder 14 formed in a pump housing 13. A high-pressure chamber 15 is formed between an end surface of the plunger 12 and a bottom surface of the cylinder 14. An outer surface of the plunger 12 near the end thereof is provided with a plurality of grooves 16 and a distribution port 17. A plurality of distribution passages 18 and an inlet port 19 are provided in the pump housing 13 to form a fuel passage from the inlet side to the outlet side.

When the fuel feed pump 6 is driven by rotation of the drive shaft 5, fuel is supplied to a fuel chamber 21 from a fuel tank (not shown in the figures) via a fuel supply port 20. The fuel in the fuel chamber 21 is introduced into the high-pressure chamber 15 when the plunger 12 is moved backward and one of the grooves 16 connects to the inlet port 19. The fuel introduced into the high-pressure chamber 15 is pressurized by the forward movement of the plunger 12, and the pressurized fuel is delivered to the fuel injection nozzle 4 via one of the distributor passages 18 under the control of an electromagnetic spill valve 23.

The pump housing 13 is provided with a spill passage 22 for spilling the fuel by allowing the high-pressure chamber 15 to communicate with the fuel chamber 21. The electromagnetic spill valve 23 which serves as a valve for adjusting the spill of the fuel from the high-pressure chamber 15 is provided in the spill passage 22. The electromagnetic spill valve 23 is a normally opened valve. When a coil 24 is not energized (i. e. in an OFF state), a valve body 25 is open so that the fuel in the high-pressure chamber 15 is spilled to the fuel chamber 21. When the coil 24 is energized (i.e. in an ON state), the valve body 25 is closed so that the fuel is prevented from spilling from the high-pressure chamber 15 to the fuel chamber 21.

The electromagnetic spill valve 23 is opened or closed responsive to the control time at which the coil 24 of the electromagnetic spill valve 23 is energized. In this way, the amount of the fuel spilled from the high-pressure chamber 15 to the fuel chamber 21 is adjusted. By opening the electromagnetic spill valve 23 during a compression stroke (forward movement) of the plunger 12, the pressure of the fuel in the high-pressure chamber 15 is reduced, and the fuel injection from the fuel injection nozzle 4 is halted. That is, the fuel pressure in the high-pressure chamber 15 cannot be increased by moving the plunger 12 forward as long as the electromagnetic spill valve 23 is open. Hence, the fuel injection from the fuel injection nozzle 4 does not take place. The amount of the fuel injected from the fuel injection nozzle 4 is controlled by controlling the timing at which the electromagnetic spill valve 23 is opened or closed during the forward movement of the plunger 12.

A timer unit 26 (shown in a 90° turned view in FIGS. 1 and 2) for adjusting the timing of the fuel injection is provided below the pump housing 13. The timer unit 26 modifies the position of the roller ring 9 in the rotational direction of the drive shaft 5 so as to modify the timing at which the cam faces 8a are engaged with the cam rollers 10, that is, the timing of the reciprocating motion of the cam plate 8 and the plunger 12.

The timer unit 26 is hydraulically driven and comprises a timer housing 27, a timer piston 28 fitted in the housing 27, and a timer spring 31 which, provided in a low-pressure chamber 29 of the timer housing 27, urges the timer piston 28 toward a pressurized chamber 30. The timer piston 28 is connected to the roller ring 9 via a slide pin 32.

The fuel, which is pressurized by the fuel feed pump 6, is introduced into the pressurized chamber 30 of the timer housing 27. The position of the timer piston 28 is determined according to a balancing relationship between the fuel pressure and the urging force of the timer spring 31. As the position of the timer spring 28 is determined, the position of the roller ring 9 is determined and, thus, the timing of the reciprocal motion of the cam plate 8 and the plunger 12 is determined.

A timing control valve 33 for adjusting the fuel pressure (that is, a control oil pressure) of the timer unit 26 is provided in the timer unit 26. That is, the pressurized chamber 30 and the low-pressure chamber 29 of the timer housing 27 are allowed to communicate with each other via a communicating passage 34. The timing control valve 33 is provided in the communicating passage 34. The timing control valve 33 is an electromagnetic valve which is opened or closed in accordance with an energizing signal subject to duty control. Opening and closing of the timing control valve 33 adjusts the fuel pressure in the pressurized chamber 30. By adjusting the fuel pressure, the timing of the fuel injection from the fuel injection nozzle 4 as well as the lift timing of the plunger 12 is controlled.

A revolution sensor 35 comprising of an electromagnetic pickup is provided above the roller ring 9 so as to face the periphery of the pulser 7. The revolution sensor 35 detects a variation in the magnetic flux as the teeth in the pulser 7 traverse a space below the revolution sensor 35. The revolution sensor 35 outputs a timing signal, that is, engine revolution pulses, corresponding to an engine revolution speed (hereinafter engine speed) NE. In other words, the revolution sensor 35 outputs a revolution-angle signal for each predetermined crank angle. Since the revolution sensor 35 is integral with the roller ring 9, the revolution sensor 35 outputs a reference time intervals signal at regular timings with respect to the lift of the plunger 12, irrespective of the control operation of the timer unit 26.

A description will now be given of the diesel engine 2. A main combustion chamber 44 corresponding to each of the engine cylinders of the diesel engine 2 comprises a cylinder 41, a piston 42 and a cylinder head 43. The main combustion chamber 44 is connected to a subsidiary combustion chamber 45 provided in correspondence to each of the engine cylinders. The fuel injected from the respective fuel injection nozzle 4 is supplied to the subsidiary combustion chamber 45. The subsidiary combustion chamber 45 is provided with a known glow plug 46 as a start assisting device.

The diesel engine 2 is provided with an intake pipe 47 and an exhaust pipe 50. The intake pipe 47 is provided with a compressor 49 of a turbocharger 48 constituting a supercharger. The exhaust pipe 50 is provided with a turbine 51 of the turbocharger 48. The exhaust pipe 50 is also provided with a waste gate valve 52 for adjusting a supercharge pressure PIM.

As is know, the turbocharger 48 is configured such that the energy of the exhaust gas is utilized to rotate the turbine 51 and the compressor 49 coupled to the same shaft as the turbine 51 so as to increase the pressure of the intake air. Thus, a fuel-air mixture having a high density is fed to the main combustion chamber 44 so that a large amount of fuel is combusted and the output of the diesel engine 2 is increased.

The diesel engine 2 is provided with a recirculation pipe 54 for returning a portion of the exhaust gas in the exhaust pipe 50 to an intake port 53 of the intake pipe 47. An exhaust gas recirculation valve (EGR valve) 55 for adjusting an recirculated exhaust gas is provided in the recirculation pipe 54. The EGR valve 55 is controlled by a vacuum switching valve (VSV) 58 so as to be opened or closed.

A throttle valve 58 which is opened and closed in cooperation with actuation of an accelerator pedal 57 is provided in the intake pipe 47. A bypass passage 59 is provided to be parallel with the throttle valve 58, and a bypass throttle valve 60 is provided in the bypass passage 59.

The bypass throttle valve 60 is controlled so as to be opened or closed by an actuator 63 having divided diaphragm chambers driven under the control of two VSVs 61 and 62.

The fuel injection pump 1, the electromagnetic spill valve 23 provided in the diesel engine 2, the timing control valve 33, the glow plug 46 and the VSVs 56, 61 and 62 are electrically connected to an electronic control unit (hereinafter, referred to as ECU) 71. The ECU 71 controls the timing at which these components are operated.

In addition to the revolution sensor 35, various sensors such as the followings are provided so as to detect the running state of the diesel engine 2. An intake air temperature sensor 72 for detecting an inlet air temperature THA in the vicinity of an air cleaner 64 is provided in the intake pipe 47. An accelerator opening sensor 73 for detecting an accelerator opening degree ACCP corresponding to a load of the diesel engine 2 is provided at the throttle valve 58. In the vicinity of the intake port 53, an intake pressure sensor 74 for detecting the supercharge pressure PIM is provided, the supercharge pressure PIM being a pressure of the intake air supercharged by the turbocharger 48.

Further, a water temperature sensor 75 for detecting the temperature THW of a cooling-water of the diesel engine 2 is provided. A crank angle sensor 76 for detecting a rotational reference position of a crank shaft 40 of the diesel engine 2 is provided. For example, the crank angle sensor 76 detects the rotational position of the crank shaft 40 with respect to a top dead center of a specific engine cylinder. Further, there is provided a vehicle speed sensor 77 for detecting a vehicle speed SP by turning a lead switch 77b ON or OFF using a magnet 77a rotated by a gear of a transmission mechanism.

The sensors 72 - 77 are electrically connected to the ECU 71. The revolution sensor 35 is also electrically connected to the ECU 71. The ECU 71 controls the electromagnetic spill valve 23, the timing control valve 33, the glow plug 46 and the VSVs 56, 61 and 62 in accordance with a signal output from the sensors 35, 72 - 77.

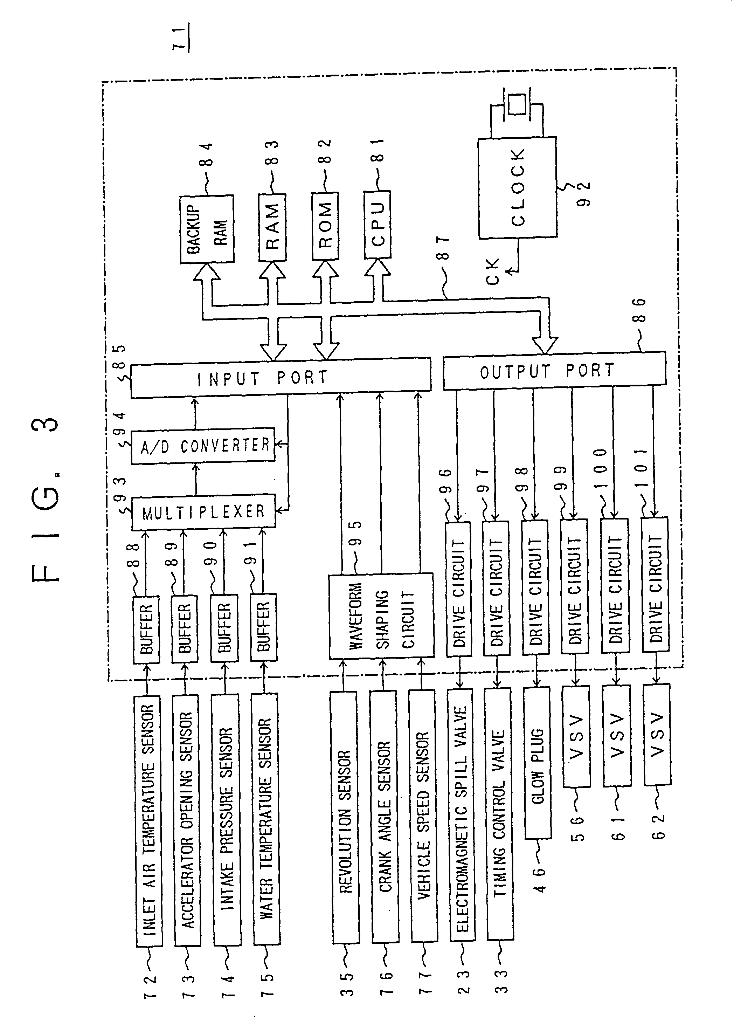

A description will now be given, with reference to the block diagram of FIG.3, of a construction of the ECU 71. The ECU 71, as a logic circuit, comprises: a central processing unit (CPU) 81; a read only memory (ROM) 82 which stores a predetermined control program or a map; a random access memory (RAM) 83 which temporarily stores operation results of the CPU; a backup RAM 84 which stores predetermined data; a clock 92 which generates a predetermined clock signal; and a bus 87 which connects the CPU 81, the ROM 82, the RAM 83, the RAM 84 and the clock 92 to an input port 85 and an output port 86.

The intake air temperature sensor 72, the accelerator opening sensor 73, the intake pressure sensor 74 and the water temperature sensor 75 are connected to the input port 85 via respective buffers 88, 89, 90, 91, a multiplexer 93 and an A/D converter 94. Likewise, the revolution sensor 35, the crank angle sensor 76 and the vehicle speed sensor 77 are connected to the input port 85 via a waveform shaping circuit 95.

The CPU 81 reads detection signals from the sensors 35, 72 - 77 via the input port 85. The electromagnetic spill valve 23, the timing control valve 33, the glow plug 46 and the VSVs 56, 61 and 62 are connected to the output port 86 via drive circuits 96, 97, 98, 99, 100 and 101, respectively.

The CPU 81 controls the electromagnetic spill valve 23, the timing control valve 33, the glow plug 46 and the VSVs 56, 61 and 62 in accordance with input values read from the sensors 35, 72 - 77.

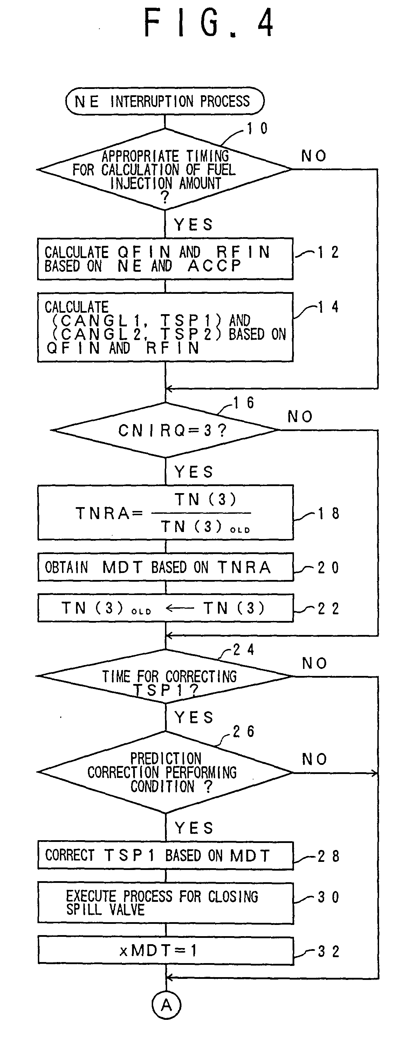

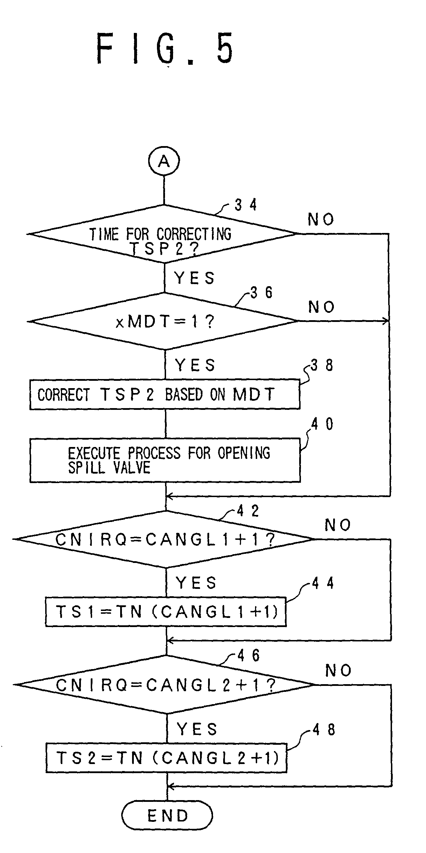

A description will now be given, with reference to FIGS.4 and 5, of an embodiment of a fuel injection control process performed by the above-mentioned ECU 71. FIGS.4 and 5 are parts of a flowchart of the embodiment of the fuel injection control process performed by the ECU 71. The fuel injection control process shown in FIGS.4 and 5 as an NE interruption process is interruptedly performed at a rising edge of each pulse output from the revolution sensor 35.

When the NE interruption process shown in FIG.4 is started, it is determined, in step 10, whether or not the timing of the NE interruption process at this time is an appropriate time to calculate a fuel injection amount. More specifically, the ECU 71 determines whether or not a pulse count value CNIRQ at this time is equal to a predetermined value at which the fuel injection amount is appropriately calculated. The pulse count value CNIRQ is a value obtained by counting the pulses output from the revolution sensor 35. A predetermined number is stored in the ECU 71 as the predetermined value for calculating the fuel injection amount. If it is determined, in step 10, that the NE interruption process at this time is an appropriate time, the routine proceeds to step 12.

In step 12, a target fuel injection amount QFIN and a target fuel injection rate RFIN are calculated based on an engine speed NE and an opening degree ACCP of the accelerator pedal 57.

In the present embodiment, the ECU 71 performs a prestroke control by which delivery of a pressurized fuel is started at an appropriate cam lift position of the plunger 12 so that the fuel injection rate REIN is varied according to operational conditions of the engine. That is, the closing time of the electromagnetic spill valve 23 is set at an appropriate cam lift position.

In step 14, a closing time and an opening time of the electromagnetic spill valve 23 are calculated. Hereinafter, the process related to determining the closing time of the electromagnetic spill valve 23 may be referred to as a prestroke side process, and the process related to determine the opening time may be referred to as a spill side process.

More specifically, in step 14, count numbers CANGL1 and CANGL2 and remainder angles ΘREM1 and ΘREM2 are calculated based on the engine revolution speed pulses output from the revolution sensor 35. The count number CANGL1 is the number of pulses generated during a closing time period from the time when a reference position, which may be the position of the tooth cut-out part, is detected to a target closing time for closing the electromagnetic spill valve 23. The target closing time is referred to as a target spill valve closing time ONSPV. That is, the count number CANGL1 is equal to the pulse count value CNIRQ at the time when the target spill valve closing time ONSPV is reached. The count number CANGL2 is the number of pulses generated during an opening time period from the time when the reference position is detected to a target opening time for opening the electromagnetic spill valve 23. The target opening time is referred to as a target spill valve opening time OFFSPV. That is, the count number CANGL2 is equal to the pulse count value CNIRQ at the time when the target spill valve opening time OFFSPV is reached. The remainder angle ΘREM1 is a crank angle which corresponds to a time period remaining for the target spill valve closing time ONSPV is reached from the time when the period corresponding to the count number CANGL1 is elapsed. That is, the remainder angle ΘREM1 is less than a single pulse period. The remainder angle ΘREM2 is a crank angle corresponds to a time period remaining when the target spill valve opening time OFFSPV from the time when the period corresponding to the count number CANGL2 has reached. That is, the remainder angle ΘREM2 is less than a single pulse period. In the present embodiment, the single pulse period corresponds to a crank angle of 11.25° CA. It should be noted that, in the present specification, a pulse period of a focused pulse refers to a time period from a rising edge of a preceding pulse to a rising edge of the focused pulse.

Accordingly, the target spill valve closing time ONSPV and the target spill valve opening time OFFSPV are represented by the following expressions.

$$ONSPV=CANGL1+\Theta REM \qquad (1)$$

$$OFFSPV=CANGL2+\Theta REM \qquad (2)$$

Since the remainder angles $\Theta REM1$ and $\Theta REM2$ are less than a single pulse period, time periods corresponding to the remainder angles $\Theta REM1$ and $\Theta REM2$ cannot be controlled by the pulse count value CNIRQ. Accordingly, the remainder angles $\Theta REM1$ and $\Theta REM2$ are converted into remainder time periods TSP1 and TSP2 based on predicted pulse periods TS1 and TS2, respectively. The closing and opening time of the electromagnetic spill valve 23 is controlled by the remainder time period TSP1 and TSP2. In the present embodiment, since the single pulse period corresponds to a crank angle of 11.25° CA, the remainder time periods TSP1 and TSP2 are represented as follows.

$$TPS1=(\Theta REM1/11.25)\times TS \qquad (3)$$

$$TPS2=(\Theta REM2/11.25)\times TS2 \qquad (4)$$

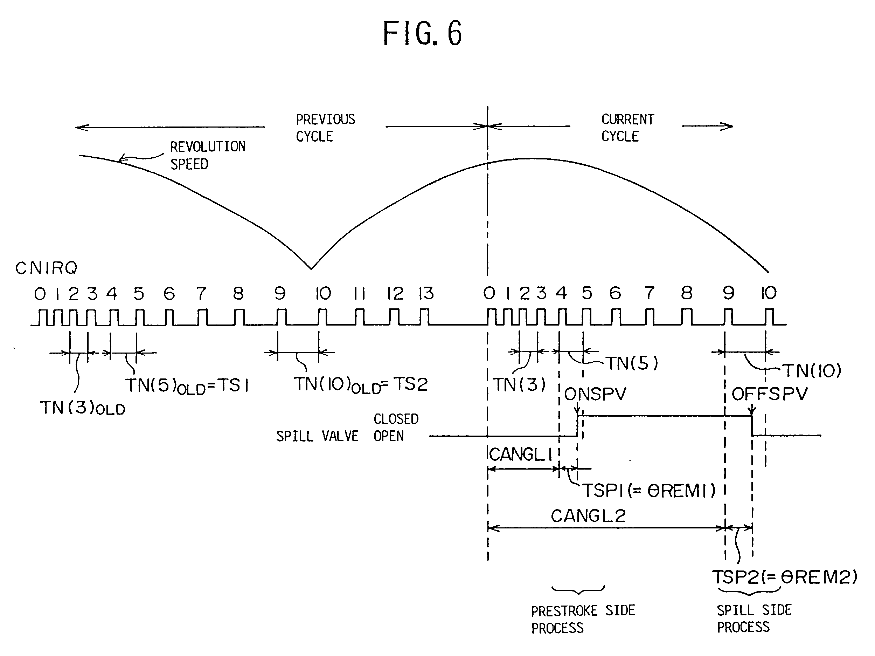

In the above expressions, the time period TS1 is a pulse period corresponding to CNIRQ=CANGL1+1 of the previous cycle, and the time period TS2 is a pulse period corresponding to CNIRQ=CANGL2+1 of the previous cycle. In an example shown in FIG.6, since CANGL1+1=5 and CANGL2+1=10, the time periods TS1 and TS2 are equal to $TN(5)_{OLD}$ and $TN(10)_{OLD}$.

As mentioned above, the calculation of the remainder time periods TSP1 and TSP2 are based on the pulse periods $TN(5)_{OLD}$ and $TN(10)_{OLD}$ obtained in the previous cycle. This is because the pulse periods TN(5) and TN(10) of the present cycle cannot be obtained until the target spill valve closing time ONSPV and the target spill valve opening time OFFSPV are reached, respectively.

If it is determined, in step 10, that the timing of the NE interruption is not appropriate for the time to calculate the fuel injection amount, the routine proceeds to step 16 without performing steps 10 to 14. In steps 16 to 22, a prediction correction factor MDT is calculated. The prediction correction factor MDT is used to correct the remainder time periods TSP1 and TSP2 in the subsequent step 28 and step 38. This correction (referred to as a prediction correction) is performed so as to eliminate an influence due to fluctuation in the revolution speed of the engine between the previous cycle and the current cycle.

As mentioned above, the remainder time periods TSP1 and TSP2 are calculated by converting the remainder angles $\Theta REM1$ and $\Theta REM2$ with respect to time, respectively, each of the remainder angles being less than a crank angle corresponding to a single pulse period, based on the pulse periods TS1 and TS2 obtained in the previous cycle.

Accordingly, accuracy of the remainder time TSP1 and TSP2 is dependent on accuracy of the pulse periods TS1 and TS2. The pulse period varies due to fluctuation in the speed of the engine. If fluctuation is generated between the previous cycle and the current cycle, there is a difference between the pulse period of the previous cycle and the corresponding pulse period of the current cycle. That is, in FIG.6, the pulse periods $TS1=TN(5)_{OLD}$ and $TS2=TN(10)_{OLD}$ of the previous cycle may differ from the pulse periods TN(5) corresponding to CNIRQ=CANGL1+1 and TN(10) corresponding to CNIRQ=CANGL2+1, respectively. The pulse periods of the previous cycle used for calculating the remainder time period TSP1 and TSP2 may be referred to as predicted pulse periods, and the pulse periods of the current cycle corresponding to the predicted pulse periods may be referred to as actual pulse periods

When there is a large difference between the actual pulse period TN(5) and the prediction pulse period $TS1=TN(5)_{OLD}$ and/or between the actual pulse period TN(10) and the prediction pulse period $TS2=TN(10)_{OLD}$, the accuracy of the remainder time periods TSP1 and TSP2 is decreased. This results in inappropriate control of the closing time and the opening time of the electromagnetic valve 23 at the target spill valve closing time ONSPV and the target spill valve opening time OFFSPV.

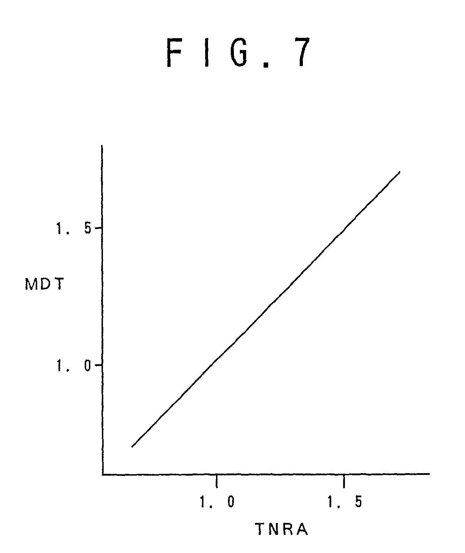

The present embodiment improves the accuracy of the fuel injection control by correcting the remainder time period by using the prediction correction factor MDT. In the present embodiment, the prediction correction factor MDT is obtained based on the pulse period corresponding to CNIRQ=3. That is, the prediction correction factor MDT is obtained by a revolution variation ratio TNRA by referring to a map representing a graph shown in FIG.7. The revolution variation ratio TNRA is obtained as a ratio of the pulse period T(3) of the current cycle to the pulse period $T(3)_{OLD}$ of the previous cycle.

$$TNRA=T(3)/T(3)_{OLD} \qquad (5)$$

After the revolution variation ratio TNRA is calculated in step 18, the routine proceeds to step 20. In step 20, the prediction correction factor MDT is obtained by a map representing the graph shown in FIG.7. Thereafter, in step 22, the pulse period T(3) of the current cycle is stored in the RAM 83 as a new pulse period $T(3)_{OLD}$ so as to prepare for the next cycle.

On the other hand, if it is determined, in step 16, that the pulse count value CNIRQ at this time is not equal to 3, the routine proceeds to step 24 without executing steps 18 to 22.

It should be noted that the pulse count value CNIRQ=3 is used in step 16 so that a sufficient time period for the injection amount control process and the prediction correction process is provided. However, the number of CNIRQ is not limited to 3 as long as there is a sufficient time period to calculate the corrected closing time of the spill valve 23.

After the process of steps 16 to 22 is completed, the routine proceeds to step 24. In step 24, it is determined whether or not the NE interruption process at this time is an appropriate time for calculating the closing time of the electromagnetic spill valve 23, that is, the remainder time period TSP1. If it is determined that the current time is appropriate for calculating the remainder time period TSP1 for the closing time, the routine proceeds to step 26. In step 26, it is determined whether or not the engine is operated in a condition appropriate for performing the prediction correction. For example, if the engine is in an idling state, the prediction correction is not necessarily performed.

If it is determined, in step 26, that the engine is operated in an appropriate condition for the prediction correction, the routine proceeds to step 28 so as to correct the remainder time period TSP1 based on the prediction correction factor MDT. Then, in step 30, the electromagnetic spill valve 23 is closed when the corrected remainder time period TSP1 has elapsed since the time when the pulse count value CNIRQ becomes equal to the count number CANGL1 calculated in step 14. Thereafter, in step 32, a prediction correction execution flag XMDT is set to 1 (XMDT=1) to indicate that the prediction correction has been applied to the closing time of the electromagnetic spill valve 23. That is, when the prediction correction execution flag is equal to 1, the closing time has been corrected by the prediction correction. When the prediction correction execution flag is equal to zero, the closing time has not been corrected.

If the determination of step 24 is negative or the determination of step 26 is negative, the routine proceeds to step 34 without performing steps 28 to 32. In step 34, it is determined whether or not the NE interruption process at this time is an appropriate time for calculating the opening time of the electromagnetic spill valve 23, that is, the remainder time period TSP2. If it is determined that the current time is appropriate for calculating the remainder time period TSP2 for the opening time, the routine proceeds to step 36. In step 36, it is determined whether or not the prediction correction execution flag XMDT is set to 1. That is, it is determined whether or not the closing time has been corrected by the prediction correction. If it is determined, in step 36, that the prediction correction flag is set to 1, the routine proceeds to step 38 so as to correct the remainder time period TSP2 for the opening time of the electromagnetic spill valve 23. Thereafter, in step 40, the electromagnetic spill valve 23 is open when the corrected remainder time period TSP2 has elapsed since the time when the pulse count value CNIRQ becomes equal to the count number CANGL2 calculated in step 14.

On the other hand, if the determination of step 24 is negative or the determination of step 26 is negative, the routine proceeds to step 42 without performing steps 38 and 40. In step 42, it is determined whether or not the NE interruption process at this time corresponds to the pulse count value CNIRQ=CANGL1+1. If the determination is affirmative, the routine proceeds to step 44. In step 44, a pulse time period TN(CANGL1+1) corresponding to the pulse count value CNIRQ=CANGL1+1 is stored in the RAM 83 as TS1 so as to prepare for the next cycle. In FIG.6, the pulse period TN(5) corresponds to the pulse period TN (CANGL1+1).

In step 46, it is determined whether or not the NE interruption process at this time corresponds to the pulse count value CNIRQ=CANGL2+1. If the determination is affirmative, the routine proceeds to step 48. In step 48, a pulse time period TN(CANGL2+1) corresponding to the pulse count value CNIRQ=CANGL2+1 is stored in the RAM 83 as TS2 so as to prepare for the next cycle, and then the routine is ended. In FIG.6, the pulse period TN(10) corresponds to the pulse period TN (CANGL2+1).

As mentioned above, in the present embodiment, the prediction correction for the remainder time period TSP2 for the opening time of the electromagnetic spill valve 23 is performed when it is determined that the remainder time period TSP1 for the closing time of the electromagnetic spill valve 23 has been performed by referring to the setting state of the prediction correction execution flag XMDT set in step 32. In other words, if it is determined that the prediction correction has not been performed on the remainder time period TSP1 for the closing time, the prediction correction is not applied to the remainder time period TSP2 for the opening time of the electromagnetic spill valve 23.

Accordingly, in the present embodiment, an error in the injection amount of fuel, when the prediction correction is applied to only one of the closing time and the opening time of the electromagnetic spill valve 23, is reduced. Thus an operation of the engine is improved.

A fuel injection control apparatus reduces an error in the fuel injection amount when a prediction correction is preformed. A target closing time and a target opening time of a spill valve (23) are corrected based on a difference in rotational speed of an associated diesel engine (2) between a current cycle and a previous cycle. The prediction correction for the opening time of the spill valve (23) is performed only when it is determined that the prediction correction for the target closing time of the spill valve has been performed in the same cycle.

**Claims**

1. A fuel injection control apparatus for an electronically controlled diesel engine (2), comprising:

a distributor type fuel injection pump (1) having a spill valve (23) which opens to return a pressurized fuel to an inlet side of said fuel injection pump (1);

a pulse generator outputting a series of engine revolution pulses at each predetermined crank angle of said diesel engine (2), said pulse generator having a gear-like pulser (7) having a tooth cut-out part in which no tooth is provided, said gear-like pulser (7) being rotated in synchronization with a rotational shaft (5) of said fuel injection pump (1); and

means for calculating a target closing time and a target opening time of said spill valve (23) in accordance with a time when said tooth cut-out part is detected, wherein

the target closing time and the target opening time of said spill valve (23) are corrected based on a difference in a rotational speed of said diesel engine (2) between a current cycle and a previous cycle; and **characterized in that**:

a correction for the target opening time of said spill valve (23) is performed only when it is determined that a correction for the target closing time of said spill valve (23) has been performed in the same cycle.

2. The fuel injection control apparatus as claimed in claim 1, **characterized in that** the determination of whether or not the target closing time has been corrected is made based on a flag set when the target closing time is corrected.

3. The fuel injection control apparatus as claimed in claim 1 or 2, **characterized in that** the correction for the target closing time and the target opening time is performed based on a ratio of a first pulse period of one of the engine revolution pulses in the current cycle to a second pulse period of a corresponding one of engine revolution pulses in the previous cycle.

4. The fuel injection control apparatus as claim in claim 3, **characterized in that** the target closing time and the target opening time are corrected by a correction factor obtained from a predetermined relationship between the correction factor and the ratio of said first pulse period to said second pulse period.

5. The fuel injection control apparatus as claimed in one of the preceding claims, **characterized in that** each of the target closing time and the target opening time is calculated based on a time period comprised of a pulse count period and a remainder period, said pulse count period corresponding to a number of engine revolution pulses to be generated during a time period from a detection of said tooth cut-out part to the target closing time or the target opening time, said remainder period corresponding a time period less than a single pulse period remaining for a time when said target closing time or said target opening time is reached.

6. The fuel injection control apparatus as claimed in claim 5, **characterized in that** said remainder period is calculated based on a crank angle of said diesel engine (2).

**Patentansprüche**

1. Kraftstoffeinspritzsteuergerät für einen elektronisch gesteuerten Dieselmotor (2) mit:

einer Kraftstoffeinspritzpumpe (1) der Verteilerart mit einer Überlaufventil (23), das öffnet, damit ein mit Druck beaufschlagter Kraftstoff zu einer Einlassseite der Kraftstoffeinspritzpumpe (1) zurückkehrt;

einem Impulsgenerator, der eine Reihe an Motordrehzahlimpulsen bei jedem vorbestimmten Kurbelwinkel des Dieselmotors (2) ausgibt, wobei der Impulsgenerator einen zahnradartigen Impulsgeber (7) mit einem Zahnradausschnittabschnitt hat, bei dem kein Zahn vorgesehen ist, wobei der zahnradartige Impulsgeber (7) synchron zu einer Drehwelle (5) der Kraftstoffeinspritzpumpe (1) gedreht wird; und

einer Einrichtung zum Berechnen einer Zielschließzeit und einer Zielöffnungszeit des Überlaufventils (23) in Übereinstimmung mit einem Zeitpunkt, bei dem der Zahnausschnittsabschnitt erfasst wird,

wobei die Zielschließzeit und die Zielöffnungszeit des Überlaufventils (23) auf der Grundlage einer Differenz in Bezug auf die Drehzahl des Dieselmotors (2) zwischen einem gegenwärtigen Zyklus und einem vorherigen Zyklus korrigiert werden,

**dadurch gekennzeichnet, dass**

eine Korrektur für die Zielöffnungszeit des Überlaufventils (23) nur dann ausgeführt wird, wenn bestimmt worden ist, dass eine Korrektur für die Zielschließzeit des Überlaufventils (3) bei dem gleichen Zyklus ausgeführt worden ist.

2. Kraftstoffeinspritzsteuergerät gemäß Anspruch 1, **dadurch gekennzeichnet, dass**

die Bestimmung, ob die Zielschließzeit korrigiert worden ist, auf der Grundlage einer Marke ausgeführt wird, die eingestellt wird, wenn die Zielschließzeit korrigiert worden ist.

3. Kraftstoffeinspritzsteuergerät gemäß Anspruch 1 oder 2,
**dadurch gekennzeichnet, dass**

die Korrektur für die Zielschließzeit und die Zielöffnungszeit auf der Grundlage eines Verhältnisses einer ersten Impulsperiode von einer der Motordrehzahlimpulse bei dem gegenwärtigen Zyklus gegenüber einer zweiten Impulsperiode von einem entsprechenden von Motordrehzahlimpulsen bei dem vorherigen Zyklus ausgeführt wird.

4. Kraftstoffeinspritzsteuergerät gemäß Anspruch 3,
**dadurch gekennzeichnet, dass**

die Zielschließzeit und die Zielöffnungszeit durch einen Korrekturfaktor korrigiert werden, der aus einer vorbestimmten Beziehung zwischen dem Korrekturfaktor und dem Verhältnis der ersten Impulsperiode gegenüber der zweiten Impulsperiode erhalten wird.

5. Kraftstoffeinspritzsteuergerät gemäß einem der vorherigen Ansprüche,
**dadurch gekennzeichnet, dass**

jeweils die Zielschließzeit und die Zielöffnungszeit auf der Grundlage einer Zeitspanne berechnet wird, die eine Impulszählperiode und eine Restperiode aufweist, wobei die Impulszählperiode einer Anzahl an Motordrehzahlimpulsen entspricht, die während einer Zeitspanne von einer Erfassung des Zahnausschnittsabschnittes bis zu der Zielschließzeit oder der Zielöffnungszeit erzeugt werden, wobei die Restperiode einer Zeitspanne entspricht, die kleiner als eine Einzelimpulsperiode ist, die für eine Zeitspanne verbleibt, wenn die Zielschließzeit oder die Zielöffnungszeit erreicht worden ist.

6. Kraftstoffeinspritzsteuergerät gemäß Anspruch 5,
**dadurch gekennzeichnet, dass**

die Restperiode auf der Grundlage eines Kurbelwinkels des Dieselmotors (2) berechnet wird.

**Revendications**

1. Un système de commande d'injection de carburant pour un moteur diesel (2) à commande électronique, comprenant :

- une pompe d'injection de carburant du type distributrice (1) comportant une soupape de décharge (23) qui s'ouvre pour renvoyer le carburant sous pression vers un côté d'aspiration de ladite pompe d'injection de carburant (1);
- un générateur d'impulsions produisant une série d'impulsions de tours de moteur à chaque position angulaire prédéterminée du vilebrequin dudit moteur diesel (2), ledit générateur d'impulsions comportant un générateur d'impulsions (7) à engrenages ayant une partie dentée découpée dans laquelle aucune dent n'est disposée, ledit générateur d'impulsions (7) à engrenages tournant de manière synchrone avec un arbre tournant (5) de ladite pompe d'injection de carburant (1) ; et
- des moyens permettant de calculer un temps de fermeture cible et un temps d'ouverture cible de ladite soupape de décharge (23) en correspondance avec un temps où ladite partie dentée découpée est détectée,

dans lequel

- le temps de fermeture cible et le temps d'ouverture cible de ladite soupape de décharge (23) sont corrigés en se basant sur une différence de régime dudit moteur diesel (2) entre un cycle en cours et un cycle précédent ;

et **caractérisé en ce que** :

- une correction n'est faite pour le temps d'ouverture cible de ladite soupape de décharge (23) que lorsqu'il est déterminé qu'une correction a été réalisée pour le temps de fermeture cible de ladite soupape de décharge (23) lors du même cycle.

2. Le système de commande d'injection de carburant selon la revendication 1, **caractérisé en ce que** la détermination selon laquelle le temps de fermeture cible a été corrigé ou non se fait sur la base du déclenchement d'un drapeau positionné lors de la correction du temps de fermeture cible.

3. Le système de commande d'injection de carburant selon la revendication 1 ou 2, **caractérisé en ce que** la correction du temps de fermeture cible et du temps d'ouverture cible s'effectue sur la base d'un rapport d'une première période d'impulsion d'une des impulsions de tours de moteur dans le cycle en cours à une seconde période d'impulsion d'une des impulsions de tours de moteur correspondante dans le cycle précédent.

4. Le système de commande d'injection de carburant selon la revendication 3, **caractérisé en ce que** le temps de fermeture cible et le temps d'ouverture cible sont corrigés par un facteur de correction obtenu à partir d'une relation prédéterminée entre le facteur de correction et le rapport de ladite première période d'impulsion à ladite seconde période d'impulsion.

5. Le système de commande d'injection de carburant selon l'une quelconque des revendications précédentes, **caractérisé en ce que** le temps de fermeture cible et le temps d'ouverture cible sont chacun calculés sur la base d'une période de temps qui se compose d'une période de comptage d'impulsions et d'une période restante, ladite période de comptage d'impulsions correspondant à un certain nombre d'impulsions de tours de moteur à générer pendant une période de temps qui s'écoule entre la détection de ladite partie dentée découpée et le temps de fermeture cible ou le temps d'ouverture cible, ladite période restante correspondant à une période de temps inférieure à une seule période d'impulsion qui s'écoule à partir du moment où ledit temps de fermeture cible ou ledit temps d'ouverture cible est atteint.

6. Le système de commande d'injection de carburant selon la revendication 5, **caractérisé en ce que** ladite période restante est calculée sur la base d'une position angulaire du vilebrequin dudit moteur diesel (2).

FIG. 1

## FIG. 2

# F I G. 3

INLET AIR TEMPERATURE SENSOR — 72
ACCELERATOR OPENING SENSOR — 73
INTAKE PRESSURE SENSOR — 74
WATER TEMPERATURE SENSOR — 75

BUFFER — 88
BUFFER — 89
BUFFER — 90
BUFFER — 91

MULTIPLEXER — 93
A/D CONVERTER — 94
INPUT PORT — 85

BACKUP RAM — 84
RAM — 83
ROM — 82
CPU — 81

71

REVOLUTION SENSOR — 35
CRANK ANGLE SENSOR — 76
VEHICLE SPEED SENSOR — 77

WAVEFORM SHAPING CIRCUIT — 95

ELECTROMAGNETIC SPILL VALVE — 23
TIMING CONTROL VALVE — 33
GLOW PLUG — 46
VSV — 56
VSV — 61
VSV — 62

DRIVE CIRCUIT — 96
DRIVE CIRCUIT — 97
DRIVE CIRCUIT — 98
DRIVE CIRCUIT — 99
DRIVE CIRCUIT — 100
DRIVE CIRCUIT — 101

OUTPUT PORT — 86

87

CK
CLOCK — 92

EP 0 737 807 B1

EP 0 737 807 B1

# F I G . 4

```
        ( N E  INTERRUPTION PROCESS )
                      │
                     ╱10╲
              ╱ APPROPRIATE TIMING ╲    NO
              ╲ FOR CALCULATION OF FUEL ╲──────┐
               ╲   INJECTION AMOUNT   ╱        │
                ╲        ?          ╱          │
                      │ YES                    │
        ┌─────────────────────────────┐       │
        │ CALCULATE Q F I N  AND  R F I N │─12  │
        │ BASED ON  N E  AND  A C C P  │       │
        └─────────────────────────────┘       │
                      │                        │
        ┌─────────────────────────────┐       │
        │ CALCULATE                   │─14     │
        │  (C A N G L 1, T S P 1) AND │        │
        │  (C A N G L 2, T S P 2) BASED ON │   │
        │ Q F I N  AND  R F I N       │        │
        └─────────────────────────────┘       │
                      │◄──────────────────────┘
                     ╱16╲            NO
              ╱   C N I R Q = 3 ?   ╲──────┐
                      │ YES                │
        ┌─────────────────────────────┐   │
        │          TN(3)              │─18 │
        │  T N R A = ───────         │    │
        │          TN(3)old          │    │
        └─────────────────────────────┘   │
                      │                    │
        ┌─────────────────────────────┐   │
        │ OBTAIN  M D T  BASED ON T N R A │─20 │
        └─────────────────────────────┘   │
                      │                    │
        ┌─────────────────────────────┐   │
        │ TN(3)old ←── TN(3)          │─22 │
        └─────────────────────────────┘   │
                      │◄──────────────────┘
                     ╱24╲           NO
              ╱ TIME FOR CORRECTING ╲──────┐
              ╲     T S P 1 ?      ╱        │
                      │ YES                 │
                     ╱26╲                   │
              ╱   PREDICTION      ╲   NO     │
              ╲ CORRECTION PERFORMING ╲──────┼──►
               ╲   CONDITION ?    ╱          │
                      │ YES                  │
        ┌─────────────────────────────┐     │
        │ CORRECT  T S P 1  BASED ON M D T │─28  │
        └─────────────────────────────┘     │
                      │                      │
        ┌─────────────────────────────┐     │
        │ EXECUTE PROCESS FOR CLOSING │─30   │
        │ SPILL VALVE                 │      │
        └─────────────────────────────┘     │
                      │                      │
        ┌─────────────────────────────┐     │
        │      x M D T = 1           │─32    │
        └─────────────────────────────┘     │
                      │◄────────────────────┘
                     (A)
```

# F I G. 5

(A)

34

TIME FOR CORRECTING
TSP2?  →  NO

YES

36

xMDT=1?  →  NO

YES

38

CORRECT TSP2 BASED ON MDT

40

EXECUTE PROCESS FOR OPENING
SPILL VALVE

42

CNIRQ=CANGL1+1?  →  NO

YES  44

TS1=TN(CANGL1+1)

46

CNIRQ=CANGL2+1?  →  NO

YES  48

TS2=TN(CANGL2+1)

END

# FIG. 6

PREVIOUS CYCLE

CURRENT CYCLE

REVOLUTION SPEED

CNIRQ

0 1 2 3 4 5 6 7 8 9 10 11 12 13    0 1 2 3 4 5 6 7 8 9 10

TN(3)$_{OLD}$

TN(5)$_{OLD}$ = TS1

TN(10)$_{OLD}$ = TS2

TN(3)

TN(5)

TN(10)

ONSPV

OFFSPV

SPILL VALVE    CLOSED    OPEN

|CANGL1|

TSP1 (= ΘREM1)

CANGL2

TSP2 (= ΘREM2)

PRESTROKE SIDE PROCESS

SPILL SIDE PROCESS

EP 0 737 807 B1

# F I G . 7